# EUROPÄISCHE PATENTSCHRIFT

(11) **EP 3 006 805 B1**
(45) Veröffentlichungstag und Bekanntmachung des Hinweises auf die Patenterteilung: **22.09.2021**
(21) Anmeldenummer: 15188733.8
(22) Anmeldetag: 07.10.2015
(51) Int. Cl.: F16L 55/165, B32B 5/02, B32B 5/22, B32B 5/26, B32B 7/14, B32B 25/14, B32B 27/08, B32B 27/12, B32B 27/30, B32B 27/32, B32B 27/34, B32B 27/36, B29C 63/06, B32B 7/05, B32B 1/08, B32B 25/10, B32B 25/04, B32B 25/08

(54) **SCHLAUCHLINER FÜR DIE KANALSANIERUNG**
HOSE LINER FOR SEWER REHABILITATION
GAINE DE CANALISATION

(30) Priorität: 08.10.2014 DE 102014114627
(43) Veröffentlichungstag der Anmeldung: 13.04.2016
(73) Patentinhaber: Buergofol GmbH, 93354 Siegenburg (DE)
(72) Erfinder: Schleicher, Franz, 85053 Ingolstadt (DE); Stark, Kurt, 91284 Neuhaus a.d. Pegnitz (DE)
(74) Vertreter: Canzler & Bergmeier Patentanwälte Partnerschaft mbB

(56) Entgegenhaltungen:
- EP-A1- 2 357 065
- WO-A1-2012/159702
- DE-U1- 29 700 236
- None

## Beschreibung

Die Erfindung betrifft einen Schlauchliner nach dem Oberbegriff des Anspruchs 1. Ein solcher Schlauchliner ist aus der EP 2 357 065 A bekannt.

Schlauchliner für die Kanalsanierung sind seit längerem bekannt. Hier ist es beispielsweise beim System Glasfaser-Schlauchliner mit UV- oder Dampfhärtung bekannt, in das zu sanierende Rohr eine dickwandige Folie aus PE mit einer hohen Dichte (HDPE - High Density Polyethylene) einzubringen, welche - zumeist in der Querschnittsform eines Halbkreises - an der Innenwand des Rohres angelegt wird. Anschließend wird ein flexibler Einlegeschlauch (auch Schlauchliner oder lediglich Liner genannt) in das zu sanierende Rohr eingezogen (Einzugsverfahren), wobei der Einlegeschlauch über die Gleitfolie gleitet. Hierdurch wird einerseits eine Beschädigung des Einlegeschlauchs durch die Rohrinnenwand bzw. Gegenstände im Rohr vermieden, andererseits ist die Reibung zwischen Einlegeschlauch und Gleitfolie sehr niedrig und erleichtert ein Einziehen des Einlegeschlauchs. Diese Funktionsweise ähnelt derjenigen eines Schuhlöffels. Ein derartiger Einlegeschlauch (Schlauchliner) weist beim System Glasfaser-Schlauchliner mit UV- oder Dampfhärtung üblicherweise einen inneren und einen äußeren Schlauch auf, zwischen denen ein Trägermaterial (beispielsweise Glasfasern) eingebracht ist, welches mit reaktivem Kunststoffharz getränkt ist. Als reaktives Kunststoffharz kommen zum Beispiel handelsübliche UP-Harze (Polyester- bzw. ungesättigte Polyesterharze), VE-Harze (Vinylesterharze) oder EP-Harze (Epoxid-Harze) zum Einsatz. Die Härtung der Harze erfolgt bei UP- oder VE-Harzen zum Beispiel mit Hilfe von Photoinitiatoren. Die Härtung kann aber auch thermisch erfolgen. Der Einlegeschlauch wird im Rohr solange aufgeblasen, bis er an der Rohrinnenwand bzw. der Gleitfolie anliegt, um anschließend das Harz - beispielsweise mittels UV-Strahlung aus einer langsam durch das Rohr gezogenen UV-Strahlungsquelle - auszuhärten. Zum Schluss kann die innere Folie des Einlegeschlauchs abgezogen und entfernt werden. Die Schicht mit dem Trägermaterial ist dann den durch das Rohr zu leitenden Substanzen exponiert.

Ein weiterer Schlauchliner ist beispielsweise aus der WO 2012/159702 bekannt. Hierbei wird um die Kombination aus innerer Schlauchfolie, Harz-Träger-Lage und äußerer Schlauchfolie ein Schutzschlauch aus einem reißfesten Werkstoff in Form von LKW-Planen-Material, d.h. PVC-verstärktem Gewebe, angeordnet, der einen sich in Längsrichtung des Schlauchliners erstreckenden Verbindungsabschnitt aufweist, welcher durch Einbringen von Druckluft in den Schlauchliner in Umfangsrichtung dehnbar ist. Bei einer Ausführungsform weist der Schutzschlauch aus dem reißfesten, nicht dehnbaren Material eine derartige Breite auf, dass die beiden Längsränder beim Umwickeln der äußeren Schlauchfolie nicht aneinander anstoßen oder sich überlappen. Zur Überbrückung der sich somit auftuenden Lücke (im Querschnitt gesehen) zwischen den Längsrändern des Schutzschlauches ist ein Verbindungsfolienstück aus einem dehnbaren Material vorgesehen, dass mit diesen Längsrändern des Schutzschlauches verbunden ist. Die frühzeitige Aushärtung des Harzes wird dadurch verhindert, dass die äußere, mechanisch anfällige Schlauchfolie undurchlässig für UV-Strahlung ausgebildet ist, wie dies aus dem Stand der Technik bekannt ist.

Es ist Aufgabe der vorliegenden Erfindung, einen Schlauchliner mit einer verbesserten Funktionalität bei einfachem Aufbau und günstigeren Kosten zur Verfügung zu stellen.

Diese Aufgabe wird durch den Schlauchliner gemäß Anspruch 1 gelöst.

Die Vorteile der Erfindung sind insbesondere darin zu sehen, dass das Außenfoliensystem des erfindungsgemäßen Schlauchliners einerseits sehr robust ist gegenüber mechanischen Einflüssen und andererseits die frühzeitige Aushärtung des Harzes (z.B. während der Lagerung) durch gleichzeitige Ausbildung als UV-Schutzfolie verhindert wird. Diese Doppelfunktion zwischen mechanischer Stärke und Schutz vor frühzeitigem Aushärten ermöglicht eine kostengünstige Ausgestaltung des erfindungsgemäßen Schlauchliners bei gleichzeitig einfachem Aufbau. Insbesondere ist der Schlauchliner aufgrund seiner mechanischen Robustheit in der Lage, in ein zu sanierendes Kanalrohr eingezogen zu werden, da der Schlauchliner auf seinem robusten, d.h. mechanisch sehr stabilem, Außenfoliensystem gleitet. Spitze Vorsprünge u.ä. im Kanalrohr können aufgrund der Reißfestigkeit und Durchstoßfestigkeit des Außenfoliensystems keine Schädigung des Schlauchliners verursachen. Da die mindestens eine Außenfolie vollständig das Harz-Träger-System umschließt, sind die oben genannten Vorteile an jeder Stelle des Schlauchliners gegeben.

Entweder weist das Außenfoliensystem eine einzige Außenfolie auf, wobei ihre Längsränder sich überlappen und im Überlappungsbereich miteinander verbunden sind. Oder es sind mehrere, vorzugsweise zwei Außenfolien vorgesehen, welche sich an ihren Längsrändern teilweise überlappen, so dass zwei Überlappungsbereiche vorgesehen sind. Bevorzugt ist die Variante mit zwei Außenfolien.

Im Folgenden wird häufig von den Außenfolien im Plural gesprochen. Hierbei soll aber auch die Variante mit nur einer Außenfolie abgedeckt sein.

Die Ein- und Weiterreißfestigkeit der Außenfolie(n) ist sehr hoch, d.h. die Außenfolien sind praktisch nicht einreißbar bzw. wenn sie eingerissen sind, so liegt der Kraftaufwand für das Weiterreißen sehr hoch. Zudem weisen sie eine nur sehr geringe bis vernachlässigbare Dehnung in Maschinenrichtung (md - machine direction), d.h. in Herstellungslaufrichtung der Folie(n), auf. Mit anderen Worten ist eine hohe Kraft in Maschinenrichtung vonnöten, um überhaupt eine gewisse Dehnung zu erzeugen.

Insgesamt weisen die Außenfolien, die einen Mono- oder Mehrschichtaufbau aufweisen können, eine hohe Reißfestigkeit, eine hohe Durchstoßfestigkeit, eine hohe Abriebfestigkeit und eine im Wesentlichen nicht vorhandene oder nur sehr schlechte Dehnbarkeit auf. Im Folgenden sind die mechanischen Eigenschaften der Außenfolie(n) wiedergegeben, wobei die Außenfolie - wie weiter unten erläutert wird - mehrere unterschiedliche Schichten aufweisen kann (einschließlich UV-Schutz und Styrol-Barriere). Erfindungsgemäß ist die Reißdehnung längs (εB) und Reißdehnung quer (εB) gemäß DIN EN ISO 527-3 bzw. DIN EN ISO 527-3 kleiner 200 %, bevorzugt kleiner 100 %, am meisten bevorzugt kleiner 50 %, und/oder ist die Weiterreißfestigkeit Trapez längs bzw. Trapez quer gemäß DIN 53363 bzw. DIN 53363 größer 100 N, bevorzugt größer 200 N, und/oder ist die Durchstoßfestigkeit gemäß ASTM E 154 größer 300 N, bevorzugt größer 500 N, besonders bevorzugt größer 800 N.

Die mindestens eine Außenfolie ist als durch ein Gewebe, Fäden, Fasern, Gitter oder Netz verstärkte Folie oder als verstärktes Gewebe, insbesondere ein PVC-verstärktes Gewebe oder ein Kevlar (Aramidfasern)-Gewebe ausgebildet.

Besonders bevorzugt sind die Außenfolien weiterhin entsprechend mindestens einer Ausgestaltung aus der folgenden Gruppe ausgebildet:
- enthaltend mindestens ein Olefin-Homo- oder Copolymer, vorzugsweise Polyethylen (PE), insbesondere ein High Density Polyethylen (HDPE);
- enthaltend mindestens ein Polyester;
- enthaltend mindestens ein Polyamid;
- enthaltend mindestens einen Kautschuk, ein Hartgummi, ein Gummi, ein Polystyrol, ein schlagzähes Polystyrol (HIPS), ein Styrol-Butadien-Copolymer, ein Acrylnitril-Butadien-Styrol-(Ter)Polymer (ABS), ein Polycarbonat (PC), ein Poly(meth)acrylat, PVC oder eine Mischung oder ein Blend der oben genannten Polymere oder weitere Co-, Terpolymere aus den Monomeren der oben genannten Polymere.

Bei all diesen Ausgestaltungen ist wichtig, dass eine hohe Abriebfestigkeit, eine große Robustheit, d.h. große mechanische Stabilität, eine hohe Ein- und Weiterreißfestigkeit und eine sehr hohe Durchstoßfestigkeit (Puncture Resistance) der Außenfolien realisiert wird.

Als in den Außenfolien einsetzbares HDPE-Material sei beispielsweise Hostalen® GD 4755 mit einer Dichte 0,953 g/cm³ von LyondellBasell Industries genannt. Die Dicke beträgt beispielsweise 300 µm.

Ein einsetzbares PVC-verstärktes Gewebe (LKW-Plane) kann eine Dicke von 400 µm mit einem Flächengewicht von 600 g/qm aufweisen.

Die mindestens eine Schicht, welche den UV-Schutz und ggf. den Schutz gegen sichtbares Licht der Außenfolien eines erfindungsgemäßen Schlauchliners vermittelt, wird vorzugsweise in Form einer UV-/Lichtschutzfolie realisiert, welche auf eine Außenschicht der Außenfolien aufgebracht, insbesondere aufkaschiert, wird. Diese Außenschicht ist beispielsweise eine vorwiegend Polyester enthaltende Schicht oder eine PVC-verstärkte Gewebeschicht. Die besagte UV-/Lichtschutzfolie ist vorzugsweise eine UV-Strahlung und vorteilhafterweise auch sichtbare Strahlung (zumindest einen Teil des sichtbaren Spektrums, vorteilhafterweise kurzwelliges sichtbares Licht) absorbierende und/oder reflektierende Folie. Vorzugsweise wird hierbei die UV-Strahlung im Wellenlängenbereich von 200 bis 400 nm und die Strahlen des sichtbaren Lichts im Wellenlängenbereich 400 bis 800 nm zumindest teilweise absorbiert und/oder reflektiert, vorzugsweise zu mehr als 90% und besonders bevorzugt von mehr als 99%. Insbesondere wird von der Folie eine Transmission im Wellenlängenbereich von 300 bis 500 nm, bevorzugt von 350 bis 450 nm weitgehend bis nahezu vollständig unterbunden, insbesondere zu mehr als 90% und besonders bevorzugt zu mehr als 99%. Es können hierzu organische und/oder anorganische Farbpigmente, Farbstoffe sowie ggf. UV-Absorber bzw. Verbindungen zum Einsatz kommen, die dem Fachmann bekannt sind (s. z.B. die DE 10 2009 041 841 A1). Die UV-/Lichtschutzfolie kann daher vollkommen blickdicht sein, oder sie ist transparent oder zumindest kontakttransparent.

Eine solche UV- und ggf. Licht-Schutzfolie ist bevorzugt an der der Harz-Träger-Lage zugewandten Außenseite der Außenfolie aufkaschiert.

In einer solchen aufkaschierten UV- und ggf. Licht-Schutzfolie können - gemäß einer ganz bevorzugten Ausführungsform - zudem chemische Verbindungen enthalten sein, die eine Barrierefunktion gegenüber insbesondere Monomeren, Harzen, Ölen, Fetten, Gasen, etc. ausüben. Insbesondere kann hierbei Polyamid in der UV-/Lichtschutzfolie Einsatz finden (s. hierzu auch weiter unten).

Gemäß einer vorteilhaften Ausführungsform kann eine Folie mit einer solchen Barriereschicht auch alternativ oder zusätzlich zu der UV- und ggf. Licht-Schutzfolie auf die Außenfolien aufkaschiert sein.

Im Folgenden werden zwei Beispiele für eine UV-/Lichtschutzfolie gegeben, wobei die verwendeten Chemikalien im Fachhandel erhältlich sind:

**Beispiel 1: silbrige Folie mit UV-Absorber; Farbbatch: Grafe 13-08485**

| Schicht-Nummer | Zusammensetzung | Anteil in Schicht in Gew-% | Dicke in µm |
|---|---|---|---|
| 1 | • Luvofilm 9679 | • 0,5 | 35 |
| | • Lupolen 2420 F | • 79,5 | |
| | • Farbbatch silber | • 20 | |
| 2 | • Haftvermittler Mitsui | • 96 | 12 |
| | Admer NF 498 E | • | |
| | • UV-Absorber Constab UVA 01490 LD | • 4 | |
| 3 | • Durethan C 38 F | • 100 | 26 |
| 4 | • Haftvermittler Mitsui | • 96 | 12 |
| Wie 2 | Admer NF 498 E | • | |
| | • UV-Absorber Constab UVA 01490 LD | • 4 | |
| 5 | • Luvofilm 9679 | • 0,5 | 35 |
| Wie 1 | • Lupolen 2420 F | • 79,5 | |
| | • Farbbatch silber | • 20 | |
| | | | Gesamtdicke: 130 µ |

**Beispiel 2: silbrige Folie mit UV-Absorber; Farbbatch: Grafe 13-08486**

| Schicht-Nummer | Zusammensetzung | Anteil in Schicht in Gew-% | Dicke in µm |
|---|---|---|---|
| 1 | • Luvofilm 9679 | • 0,5 | 35 |
| | • Lupolen 2420 F | • 79,5 | |
| | • Farbbatch silber | • 20 | |
| 2 | • Haftvermittler Mitsui | • 96 | 12 |
| | Admer NF 498 E | • | |
| | • UV-Absorber Constab UVA 01490 LD | • 4 | |
| 3 | • Durethan C 38 F | • 100 | 26 |
| 4 | • Haftvermittler Mitsui | • 96 | 12 |
| Wie 2 | Admer NF 498 E | • | |
| | • UV-Absorber Constab UVA 01490 LD | • 4 | |
| 5 | • Luvofilm 9679 | • 0,5 | 35 |
| Wie 1 | • Lupolen 2420 F | • 79,5 | |
| | • Farbbatch silber | • 20 | |
| | | | Gesamtdicke 130 µ |

Die Außenfolien weisen bevorzugt eine Dicke im Bereich 50 bis 10.000 µm, bevorzugt 100 bis 5.000 µm, besonders bevorzugt 200 µm bis 1000 µm auf.

Die Verbindungsstellen zwischen den sich überlappenden Längsrändern nur einer verwendeten Außenfolie bzw. zwischen den Längsrändern mehrerer Außenfolien sind besonders bevorzugt als Sollbruchstellen ausgebildet. Bei radialer Dehnung des Schlauchliners beim Aufblasen nach Einbringung in das zu sanierende Kanalrohr brechen die Sollbruchstellen und die Längsränder der Außenfolie(n) verschieben sich in Umfangsrichtung zueinander. Da der Aushärtevorgang kurz danach beginnt, kann durch sich ggf. herbei auftuenden Lücken Harz in nennenswerter Menge nicht austreten.

Die sich überlappenden Längsränder der Außenfolien sind vorzugsweise mittels eines ggf. doppelseitigen Klebebands, einer thermischen Schweißnaht, eines Hotmelt-Klebers oder eines sonstigen Klebers in Form einer durchgehenden Klebenaht oder unterbrochenem Kleberauftrag miteinander verbunden. Eine Verklebung kann beispielsweise mittels eines handelsüblichen 2K PUR Klebers erfolgen. Weitere Beispiele finden sich in der oben genannten WO 2012/159702. Es kann auch ein Standard-Gewebeband, ein Panzerband, ein Panzertape, oder ein Packband (beispielsweise 50m x 38mm silber) verwendet werden.

Es ist bevorzugt, wenn die Verbindungsstellen in den Überlappungsbereichen dicht gegenüber Komponenten des Harzes sind, so dass an keiner Stelle des Außenfoliensystems Bestandteile des Harzes austreten können.

Besonders bevorzugt ist auf der zur Harz-Träger-Lage gerichteten Seite zumindest einer Außenfolie, vorzugsweise allen Außenfolien, ein für Harz oder Flüssigkeiten saugfähiges Material, wie z.B. ein Vlies, aufkaschiert. Dieses Material liegt dann direkt der Harz-Träger-Lage gegenüber und ermöglicht eine bessere Anbindung des Harzes. Statt einer Kaschierung kann das Material, z.B. ein Vlies, beispielsweise auch aufgetackert werden. Der Fachmann kennt die Methoden zur Verbindung von Folien mit Materialien, die Harze und Flüssigkeiten aufsaugen können.

Gemäß einer Alternative ist zwischen den Außenfolien und der Harz-Träger-Lage mindestens eine weitere separate (d.h. nicht aufkaschierte) Folie angeordnet. Diese kann beispielsweise eine Wickelfolie sein, welche um das Harz-Träger-System gewickelt ist. Auch ist es möglich, dass diese mindestens eine Folie eine Verkleidungsfolie ist. Auf der weiteren Folie - zur Seite des Harz-Träger-Systems hin - ist gemäß einer vorteilhaften Ausführungsform ein Vlies oder ein Nonwoven aufgebracht. Die Dicke dieser Folie beträgt vorzugweise 10 bis 1000 µm, während das Vlies bzw. das Nonwoven ein Flächengewicht von vorzugsweise 5 g/qm bis 500 g/qm aufweist.

Die mindestens eine weitere Folie kann auch als eine Barrierefolie mit einer sehr guten Haftung zum Harz ausgebildet sein. Ein Vlies (bzw. allgemein ein für Flüssigkeiten und Harze saugfähiges Material) ist dann nicht notwendig.

Die mindestens eine weitere Folie (Schutzfolie, Wickelfolie) kann beispielsweise eine 50 µ PE-PA-PE-Folie mit dem Aufbau: PE 10 µm, Haftvermittler 5 µm, PA 10 µm, Haftvermittler 5 µm, PE 10 µm, kaschiert gegen ein 50 g/qm Vlies sein. Das ATG kann 15 g/qm betragen.

Die mindestens eine weitere Folie kann mittels Umwickeln der Harz-Träger-Lage aufgebracht werden. Alternativ kann die mindestens eine weitere Folie in Form einer Flachfolie vorliegen, welche um die Harz-Träger gehüllt und anschließend verschweißt wird. Auch eine Schlauchfolie oder ein schlauchförmiger Verbund aus Folie/Nonwoven ist als die mindestens eine weitere Folie denkbar. Der Zweck dieser mindestens einen weiteren Folie ist der Schutz des reaktiven Harzes, damit dieses nicht in die Umwelt austreten kann.

Vorzugsweise ist in mindestens einer Folie, die um das Harz-Träger-System angeordnet ist, ein Polyamid als Styrolbarriere enthalten. Polyamid kann gemäß einem bevorzugten Ausführungsbeispiel insbesondere in einer Schicht der Außenfolien enthalten sein. Der Polyamid-Anteil in dieser Schicht beträgt hierbei beispielsweise mehr als 50 Gew.-%. Gemäß einer Alternative ist in einer Schicht der oben genannten mindestens einen weiteren Folie Polyamid in genügender Menge enthalten, damit diese Schicht als Styrolbarriere dienen kann.

Diesbezüglich ist es bevorzugt, wenn mindestens eine Schicht der Außenfolien als Barriereschicht gegen Komponenten des reaktiven Harzes ausgebildet ist.

Eine besonders bevorzugte Ausführungsform des erfindungsgemäßen Schlauchliners weist Außenfolien auf, welche die besagte mechanische Robustheit bzw. Stabilität aufweisen, gegen UV-Strahlung und ggf. sichtbares Licht weitgehend undurchlässig sind und eine Barriere gegen Styrol aufweisen. Zusätzlich kann noch ein Vlies oder ein Nonwoven zur Seite der Harz-Träger-Lage angeordnet sein.

Gemäß einer vorteilhaften Ausführungsform überstreicht diejenige Außenfolie, die an der Kanalrohrsohle zur Anlage vorgesehen ist, in Umfangsrichtung einen Winkelbereich von mehr als 180°, beispielsweise von mehr als 240°. Bei einem Winkelbereich von 180° befinden sich die beiden Längsränder dieser Außenfolie vorzugsweise auf horizontal gleicher Höhe. Beim Einziehen des erfindungsgemäßen Schlauchliners in ein zu sanierendes Kanalrohr gleitet dann der Schlauchliner auf dieser unteren Außenfolie über die Kanalrohrsohle.

Vorzugsweise ist eine im Querschnitt gesehen obere Außenfolie vorgesehen, der in Umfangsrichtung einen Winkelbereich von weniger als 180° überstreicht und von oben auf eine untere Außenfolie aufgesetzt und randseitig mit diesem unter Bildung einer Überlappung verbunden ist. Diese obere Außenfolie ist dann eine Art Deckel für einen oder mehrere untere Außenfolien. Die Verbindungsstellen sind zwischen der oberen und einer unteren Außenfolie liegen dann oberhalb der Belastungsstellen beim Einziehen des Schlauchliners in ein Kanalrohr.

Im Folgenden wird kurz auf die bevorzugte Beschaffenheit der Schlauchinnenfolie des erfindungsgemäßen Schlauchliners eingegangen. Diese muss im Gegensatz zum Außenfoliensystem eine sehr gute Durchlässigkeit gegenüber UV-Strahlung und kürzerwelliger Strahlung sichtbaren Lichts aufweisen. Damit wird der Aushärtungsvorgang ermöglicht, der beim im Rohr aufgeblasenen Schlauchliner durch eine UV-Strahlungsquelle vorgenommen wird, die an der Innenseite des Schlauchliners, also innerhalb der Schlauchinnenfolie, hindurchgezogen wird.

Außerdem darf die Schlauchinnenfolie bei Druckbeaufschlagung nicht platzen und muss eine gute Dehnbarkeit aufweisen, um den Schlauchliner im Kanal aufstellen zu können.

Die Schlauchinnenfolie kann beispielsweise gemäß der EP 2 740 592 A oder der EP 2 740 587 A ausgebildet sein.

Ein beispielhafter Aufbau einer Schlauchinnenfolie kann wie folgt aussehen:

| Schicht-Nummer | Zusammensetzung | Anteil in Schicht in % | Dicke in µm |
|---|---|---|---|
| (1) | • Durethan C38 F | • 88 | 40 |
| | • Durethan B40 FAM | • 12 | |
| (2) | • Haftvermittler: Admer NF 498 E | • 100 | 10 |
| (3) | • Lupolen 2420 F | • 70 | 65 |
| | • Exceed 1327 CA | • 30 | |
| (4) | • Haftvermittler: Admer NF 498 E | • 100 | 10 |
| (5) | • Lupolen 2420 F | • 70 | 75 |
| | • Exceed 1327 CA | • 30 | |
| | | | Gesamtdicke: 200 µm |

Als Harz-Träger-Systeme kommen beispielsweise die oben genannten Systeme in Frage. Das Trägersystem kann beispielweise in Form von Glasfasern ausgebildet sein.

Aus dem oben Gesagten wird klar, dass die Außenfolien aufgebrachte Folien aufweisen können, wobei beispielsweise eine Thermokaschierung, eine Extrusionskaschierung, eine Kleberkaschierung, eine Kalandrierung oder sonstige dem Fachmann geläufige Arten zur Verbindung von Folien miteinander oder von Folien mit Vlieses bzw. Nonwoven bzw. ein für Flüssigkeiten und Harze saugfähiges Material zum Einsatz kommen kann. Eine solche Verbindung kann zwischen einer UV-/Lichtschutzfolie mit einer mechanisch robusten, d.h. mechanisch sehr stabile, Folie bzw. einem solchen Gewebe realisiert werden. Auch kann die UV-/Lichtschutzfolie und ein Vlies bzw. Nonwoven derart verbunden werden, wobei diese Kombination dann zusammen mit der auf ihr aufgebrachten mechanisch robusten Folie Bestandteil des erfindungsgemäßen Außenfoliensystems ist.

In den Figuren sind schematisch zwei verschiedene Ausführungsbeispiele der Erfindung dargestellt. Es zeigen:
- **Fig. 1**: eine erste Ausführungsform eines erfindungsgemäßen Schlauchliners mit zwei Außenfolien und separater weiterer Folie mit aufkaschiertem Vlies, im Querschnitt;
- **Fig. 2**: eine zweite Ausführungsform eines erfindungsgemäßen Schlauchliners mit zwei Außenfolien und auf beiden Außenfolien aufkaschierten Vliesen, im Querschnitt, und
- **Fig. 3**: eine zweite Ausführungsform eines erfindungsgemäßen Schlauchliners mit nur einer Außenfolie und aufkaschiertem Vlies, im Querschnitt.

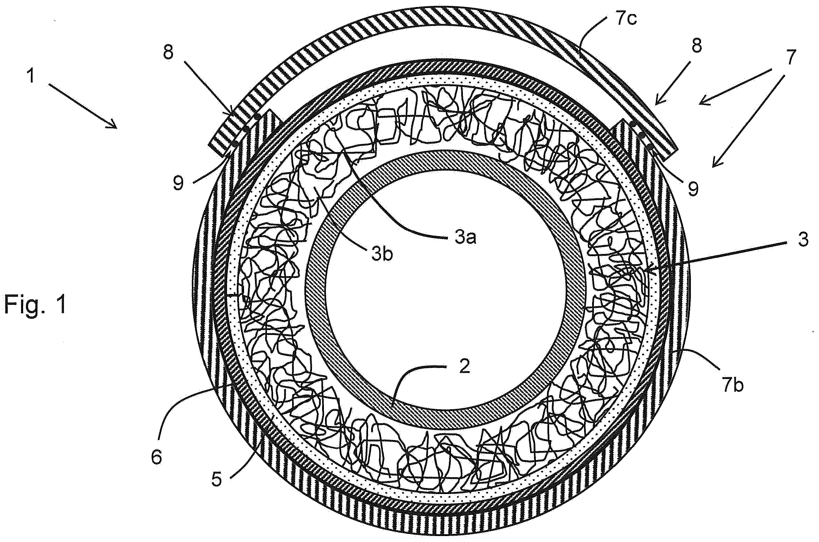

In der Fig. 1 ist ein erstes Ausführungsbeispiel eines erfindungsgemäßen Schlauchliners 1 zur Auskleidung eines zu sanierenden Kanalrohrs dargestellt. Der Schlauchliner 1 umfasst eine Schlauchinnenfolie 2, eine Harz-Träger-Lage 3 und eine die Harz-Träger-Lage 3 umgebende weitere Folie 6.

Die Schlauchinnenfolie 2 ist prinzipiell aus dem Stand der Technik bekannt, wobei diverse Ausführungen existieren. Sie kann verschiedene Schichten enthalten, wobei insbesondere eine Durchlässigkeit für UV-Strahlung vorhanden ist, um eine UV-Strahlungsquelle durch den von der Schlauchinnenfolie 2 gebildeten Hohlraum in Längsrichtung des Schlauchliners 1 zu führen und hierdurch das reaktive, durch UV-Strahlung aushärtbare Harz 3b zu trocknen.

Als Trägermaterial 3a der Harz-Träger-Lage 3 sind beispielsweise Glasfasern verwendbar. Als reaktive Harze 3b kommen insbesondere reaktive Kunststoffharze in Frage, die der Fachmann aus dem Kanalsanierungsbereich kennt.

Die weitere Folie 6 ist auf ihrer zur Harz-Träger-Lage 2 gerichteten Seite mit einem Vlies 5 kaschiert. Die weitere Folie 6 kann insbesondere eine oder mehrere Barriereschichten, insbesondere Polyamid enthalten, aufweisen, um aus dem Harz stammendes Styrol am Entweichen aus der Harz-Träger-Lage 3 zu hindern. Auch können weitere Barriere-Chemikalien in der ein- oder mehrschichtigen Folie 6 enthalten sein, beispielsweise EVOH.

Um die weitere Folie 6 herum ist ein Außenfoliensystem 7 angeordnet, das vorliegend zwei Außenfolien 7b, 7c umfasst. Die untere Außenfolie erstreckt sich in einem Winkelbereich von ca. 270°, wobei deren beiden Längsränder 8 auf ungefähr gleicher horizontaler Höhe liegen. Auf die Längsränder 8 der Folie 7b ist eine obere Außenfolie 7c aufgelegt, welche einen Winkelbereich von ca. 120° überspannt. Die Längsränder 8 der beiden Außenfolien 7b, 7c sind an sich in die Bildebene hinein erstreckenden drei Längsklebenähten miteinander verbunden, die auf diese Weise Verbindungsstellen 9 bilden.

Zum Herstellen der Verbindungsstellen 9 können die unterschiedlichsten Klebetechniken angewendet werden, beispielsweise doppelseitiges Klebeband. Wichtig ist, dass die Längsränder 8 beim Aufblasen des Schlauchliners 1 (nach Einbringen in den zu sanierenden Kanal im druckluftlosen Zustand) sich gegeneinander verschieben können, d.h. dass die Verbindungsstellen 9 sich dehnen und ggf. brechen können. Die Verbindungsstellen 9 wirken dann als Sollbruchstellen.

Die den Überlappungsbereiche mit den Verbindungsstellen 9 sind bevorzugt dicht gegenüber Komponenten des Harzes.

Dieses Vorsehen der Dehnung in Umfangsrichtung (bei Aufbringung von radialem Druck von innen her) ist wichtig, da die Außenfolien 7b, 7c mindestens eine mechanisch sehr robuste Schicht aufweisen. Hierunter wird verstanden, dass die Außenfolien eine hohe Abriebfestigkeit, eine große Robustheit, eine hohe Ein- und Weiterreißfestigkeit und eine hohe Durchstoßfestigkeit (Puncture Resistance) aufweisen, da sie durch das Kanalrohr gezogen werden und nach dem Aufblasen an der Kanalrohrwand anliegen und somit sehr hohen mechanischen Belastungen ausgesetzt sind. Die mechanische Robustheit schützt den Schlauchliner 1 somit vor einer Beschädigung bzw. Zerstörung.

Die besagte mindestens eine Schicht der Außenfolien 7b, 7c kann beispielsweise durch eine HDPE-Folie, durch eine Folie mit einem über 50 Gew-%. liegenden Polyester-Anteil oder durch ein verstärktes Gewebe, beispielsweise eine PVC-beschichtetes Gewebe (wie bei einer LKW-Plane) realisiert werden.

Bei der Überlappung können die Längsränder 8 der Folie 7b auch oberhalb der Längsränder 8 der Folie 7c liegen. Auch ist es möglich, dass einer der beiden Längsränder 8 der Folie 7b oberhalb und der andere Längsrand der Folie 7b unterhalb des jeweiligen Längsrandes 8 der Folie 7c liegt.

Die Außenfolien 7b, 7c weisen zudem mindestens eine für UV-Strahlung und ggf. sichtbares Licht im Wesentlichen undurchlässige Schicht auf. Hierzu beinhaltet diese Schicht beispielsweise organische und/oder anorganische Farbpigmente, Farbstoffe sowie ggf. UV-Absorber bzw. Verbindungen, die dem Fachmann bekannt sind, z.B. aus der DE 10 2009 041 841 A1. Insbesondere wird durch die mindestens eine Schicht bevorzugt eine Transmission im Wellenlängenbereich von 300 bis 500 nm, bevorzugt von 350 bis 450 nm weitgehend bis nahezu vollständig unterbunden, insbesondere zu mehr als 90% und besonders bevorzugt zu mehr als 99%.

Die besagte mindestens eine Schicht der Außenfolien 7b, 7c wird vorzugsweise in Form einer UV-/Lichtschutzfolie auf die besagte mindestens eine mechanisch robuste Schicht der Außenfolien 7b, 7c aufkaschiert, vorzugsweise von der zum Schlauchliner-Inneren gewandten Seite.

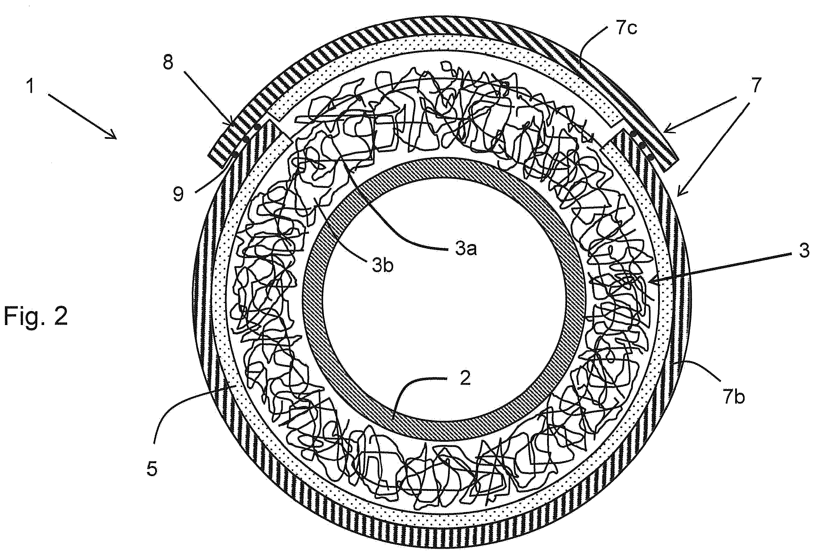

In der Fig. 2, in der gleiche Bezugszeichen für gleiche oder vergleichbare Merkmale verwendet wurden, ist ein zweiter erfindungsgemäßer Schlauchliner 1 im Querschnitt dargestellt, wobei der Unterschied darin besteht, dass keine weitere Folie (Folie 6 in der Fig. 1) vorgesehen ist. Vielmehr ist auf den zum Schlauchliner-Inneren gewandten Außenfolien 7b, 7c jeweils ein Vlies 5 aufkaschiert. Das Vlies wird hierbei vorzugsweise auf die besagte UV-/Lichtschutzfolie aufkaschiert.

Die in der Fig. 2 gezeigte Variante hat den Vorteil, dass keine separate Folie 6, die bei allen bekannten Systemen stets verwendet wird, notwendig ist. Es ist vielmehr das Außenfoliensystem 7 vorhanden, welches die mechanische Widerstandfähigkeit, den UV-Schutz und ggf. den Schutz gegen der UV-Strahlung nahem sichtbarem Licht sowie die Anbindung des Harzes an die Vliese 5 realisiert. Zudem kann eine Barrierefunktion gegenüber insbesondere Styrol mittels einer in den Außenfolien 7b, 7c eingebrachten Polyamid-Schicht realisiert werden. Insgesamt wird ein relativ einfach aufgebauter, insgesamt sehr kostengünstiger und allen Anforderungen gerecht werdender Schlauchliner 1 realisiert.

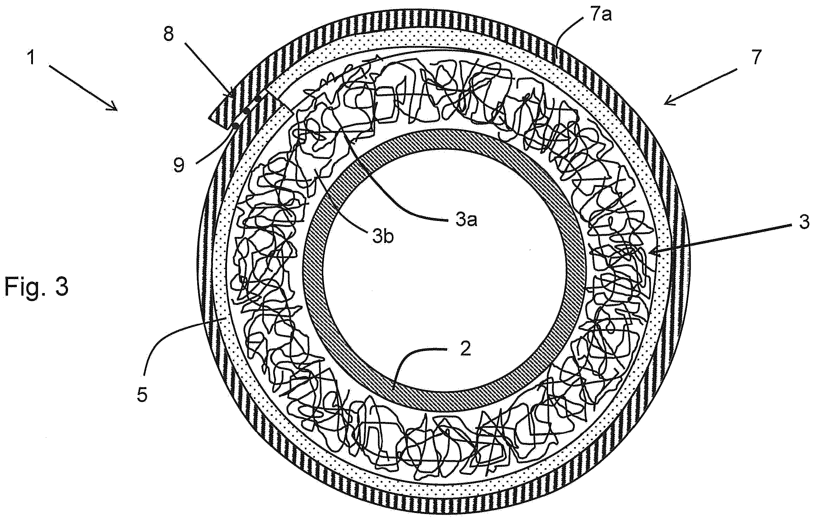

In der Fig. 3 ist schließlich ein drittes Ausführungsbeispiel eines erfindungsgemäßen Schlauchliners 1 dargestellt. Hierbei umfasst das Außenfoliensystem 7 lediglich eine einzige Außenfolie 7a, welche an ihren beiden Längsrändern 8 überlappend angeordnet ist. Auch hier sind drei senkrecht zur Bildebene und sich längs des Schlauchliners 1 erstreckende, bei radialer Dehnung des Schlauchliners 1 sich in Umfangsrichtung dehnende und schließlich möglicherweise brechende Klebenähte vorgesehen, welche eine Verbindungsstelle 9 bilden. Bei dieser Variante wird zwar auf eine zweite Außenfolie verzichtet, die einzige Außenfolie 7a muss allerdings dafür breitere hergestellt werden. Auch müssen die Klebenähte derart ausgeführt sein, dass sie sich tatsächlich dehnen und ggf. brechen (bei zwei Verbindungsstellen 9, d.h. bei zwei Außenfolien, ist die Wahrscheinlichkeit einer diesbezüglichen Fehlfunktion geringer).

Wie der Fig. 3 weiter zu entnehmen ist, ist auf der Innenseite der Außenfolie 7 wiederum ein Vlies 5 kaschiert, das zur Anhaftung seitens des Harzes 3b dient.

Die Außenfolie 7 des Außenschlauchsystems 7 gemäß der Fig. 3 weist zudem mindestens eine für UV-Strahlung und ggf. zumindest UV-nahes sichtbares Licht undurchlässige Schicht, vorzugsweise in Form einer aufkaschierten UV-/Lichtschutzfolie, sowie bevorzugt mindestens eine Barriereschicht gegen den Durchtritt von Komponenten des Harzes auf, wobei diese Barriereschicht vorzugsweise Polyamid enthält.

## Patentansprüche

1. Schlauchliner (1) für die Kanalsanierung, mit mindestens:
- einer Schlauchinnenfolie (2);
- mit einer die Schlauchinnenfolie (2) umgebenden Harz-Träger-Lage (3), wobei das Harz (3b) mittels UV-Strahlung aushärtbar ist;
- mit einem die Harz-Träger-Lage (3) umgebenden, mechanisch schützenden Außenfoliensystem (7) mit mindestens einer sich in Längsrichtung des Schlauchliners (1) erstreckenden Außenfolie (7a; 7a, 7b), wobei die Längsränder (8) der Außenfolie (7a) oder der Außenfolien (7b, 7c) in Umfangsrichtung des Schlauchliners (1) überlappend miteinander verbunden sind, wobei die daraus resultierende mindestens eine Verbindungsstelle (9) bei Dehnung in Radialrichtung beim Einbringen des Schlauchliners (1) in einen zu sanierenden Kanal sich dehnt und ggf. bricht, und wobei die mindestens eine Außenfolie (7a; 7b, 7c) mindestens eine für UV-Strahlung und ggf. sichtbares Licht im Wesentlichen undurchlässige Schicht aufweist,
**dadurch gekennzeichnet, dass**
die mindestens eine Außenfolie (7a; 7b, 7c) jeweils mindestens eine Schicht aus einem mechanisch sehr stabilen und im Wesentlichen nicht oder nur sehr schlecht dehnbaren Werkstoff aufweist, wobei die mindestens eine Außenfolie (7a; 7b, 7c) ausgebildet ist als durch ein Gewebe, Fäden, Fasern, Gitter oder Netz verstärkte Folie oder als verstärktes Gewebe, insbesondere ein PVC-verstärktes Gewebe oder ein Kevlar (Aramidfasern)-Gewebe, und wobei die besagte mechanische Stabilität und schlechte Dehnbarkeit der mindestens einen Außenfolie (7a; 7b, 7c) durch eine oder mehrere der folgenden mechanischen Eigenschaften definiert ist:
- die Reißdehnung längs (εB) und Reißdehnung quer (εB) gemäß DIN EN ISO 527-3 bzw. DIN EN ISO 527-3 ist kleiner 200 %, bevorzugt kleiner 100 %, am meisten bevorzugt kleiner 50 %;
- die Weiterreißfestigkeit Trapez längs bzw. Trapez quer gemäß DIN 53363 bzw. DIN 53363 ist größer 100 N, bevorzugt größer 200 N; und/oder
- die Durchstoßfestigkeit gemäß ASTM E 154 ist größer 300 N, bevorzugt größer 500 N, besonders bevorzugt größer 800 N.

2. Schlauchliner nach Anspruch 1, **dadurch gekennzeichnet, dass** die mindestens eine Außenfolie (7a; 7b, 7c) weiterhin entsprechend mindestens einer Ausgestaltung aus der folgenden Gruppe ausgebildet ist:
- enthaltend mindestens ein Olefin-Homo- oder Copolymer, vorzugsweise Polyethylen (PE), insbesondere ein High Density Polyethylen (HDPE),
- enthaltend mindestens ein Polyester,
- enthaltend mindestens ein Polyamid,
- enthaltend mindestens einen Kautschuk, ein Hartgummi, ein Gummi, ein Polystyrol, ein schlagzähes Polystyrol (HIPS), ein StyrolButadien-Copolymer, ein Acrylnitril-Butadien-Styrol-(Ter)Polymer (ABS), ein Polycarbonat (PC), ein Poly(meth)acrylat, PVC oder eine Mischung oder ein Blend der oben genannten Polymere oder weitere Co-, Terpolymere aus den Monomeren der oben genannten Polymere.

3. Schlauchliner nach mindestens einem der vorhergehenden Ansprüche, **dadurch gekennzeichnet, dass** UV- und sichtbares Licht-Strahlung im Wellenlängenbereich von 300 bis 500 nm, bevorzugt von 350 bis 450 nm, zu mehr als 90% und besonders bevorzugt zu mehr als 99% unterbunden wird, insbesondere durch Zusatz von organischen und/oder anorganischen Farbpigmente und Farbstoffen sowie ggf. UV-Absorbern in mindestens eine Schicht der mindestens einen Außenfolie (7a; 7b, 7c).

4. Schlauchliner nach mindestens einem der vorhergehenden Ansprüche, **dadurch gekennzeichnet, dass** die mindestens eine für UV-Strahlung und ggf. sichtbares Licht im Wesentlichen undurchlässige Schicht in Form einer UV-/Lichtschutzfolie auf die besagte mechanisch stabile Schicht aufkaschiert ist, ggf. mit einer oder mehreren Zwischenschichten.

5. Schlauchliner nach mindestens einem der vorhergehenden Ansprüche, **dadurch gekennzeichnet, dass** die Dicke der mindestens einen Außenfolie (7a; 7b, 7c) im Bereich 50 bis 10.000 µm, bevorzugt 100 bis 5.000 µm, besonders bevorzugt 200 µm bis 1000 µm beträgt.

6. Schlauchliner nach mindestens einem der vorhergehenden Ansprüche, **dadurch gekennzeichnet, dass** die mindestens eine Verbindungsstelle (9) zwischen den Längsrändern der Außenfolie (7a) bzw. Außenfolien (7b, 7c) eine Sollbruchstelle darstellt, die bei radialer Dehnung des Schlauchliners (1) zu platzen oder aufzubrechen vermag.

7. Schlauchliner nach mindestens einem der vorhergehenden Ansprüche, **dadurch gekennzeichnet, dass** die sich überlappenden Längsränder (8) mittels eines ggf. doppelseitigen Klebebands, einer thermischen Schweißnaht, eines Hotmelt-Klebers oder eines sonstigen Klebers in Form einer durchgehenden Klebenaht oder unterbrochenem Kleberauftrag miteinander verbunden sind.

8. Schlauchliner nach mindestens einem der vorhergehenden Ansprüche, **dadurch gekennzeichnet, dass** auf der zur Harz-Träger-Lage (3) gerichteten Innenseite zumindest einer Außenfolie (7a; 7b, 7c), vorzugsweise auf allen Außenfolien (7a; 7b, 7c), ein Vlies (5) oder ein anderes für Flüssigkeiten und Harze saugfähiges Material aufgebracht ist zum Zwecke der besseren Anhaftung an das Harz der Harz-Träger-Lage (3).

9. Schlauchliner nach mindestens einem der vorhergehenden Ansprüche, **dadurch gekennzeichnet, dass** zwischen der Harz-Träger-Lage (3) und dem Außenfoliensystem (7) mindestens eine Folie vorgesehen ist, insbesondere eine Wickelfolie (6) oder eine Verkleidungsfolie (6), die ggf. verbunden sind mit einem Vlies (5) oder einem anderen für Flüssigkeiten und Harze saugfähigem Material.

10. Schlauchliner nach mindestens einem der vorhergehenden Ansprüche, **dadurch gekennzeichnet, dass** zumindest in einer Schicht einer die Harz-Träger-Lage (3) umgebenden Folie (7a, 7b; 6) ein Polyamid als Styrolbarriere enthalten ist.

11. Schlauchliner nach mindestens einem der vorhergehenden Ansprüche, **dadurch gekennzeichnet, dass** mindestens eine Schicht der mindestens einen Außenfolie (7a; 7b, 7c) eine Barrierefunktion gegen Komponenten des reaktiven Harzes besitzen.

12. Schlauchliner nach mindestens einem der vorhergehenden Ansprüche, **dadurch gekennzeichnet, dass** diejenige Außenfolie (7a; 7b), die an der Kanalrohrsohle zur Anlage vorgesehen ist, in Umfangsrichtung einen Winkelbereich von mehr als 180° überstreicht, wie beispielsweise von mehr als 240°.

13. Schlauchliner nach mindestens einem der vorhergehenden Ansprüche, **dadurch gekennzeichnet, dass** eine im Querschnitt gesehen obere Außenfolie (7c) vorgesehen ist, der in Umfangsrichtung einen Winkelbereich von weniger als 180° überstreicht und von oben auf eine untere Außenfolie (7b) aufgesetzt und randseitig mit diesem unter Bildung einer Überlappung verbunden ist.

## Claims

1. Tubular liner (1) for sewer rehabilitation, with at least:
- one inner tubular film (2);
- with a resin-carrier layer (3) surrounding the inner tubular film (2), wherein the resin (3b) is curable by means of UV radiation;
- with a mechanically protective outer film system (7) surrounding the resin-carrier layer (3), with at least one outer film (7a; 7a, 7b) extending in the longitudinal direction of the tubular liner (1), wherein the longitudinal edges (8) of the outer film (7a) or the outer films (7b, 7c) are connected to each other in an overlapping manner in the circumferential direction of the tubular liner (1), wherein the at least one connecting point (9) resulting from this, upon the elongation in the radial direction during the insertion of the tubular liner (1) in a sewer to be rehabilitated, is elongated and may break, and wherein the at least one outer film (7a; 7b, 7c) features at least one layer that is essentially impermeable for UV radiation and, if applicable, visible light,
**characterized in that**
each of the at least one outer films (7a; 7b, 7c) features at least one layer made of a material that is mechanically very stable and is essentially not able to elongate or able to elongate only very poorly, wherein the at least one outer film (7a; 7b, 7c) is formed as a reinforced film, for example reinforced by a fabric, threads, fibers, grid or mesh, or formed as a reinforced fabric, in particular a PVC-reinforced fabric or a Kevlar (aramid fiber) fabric, and wherein the specified mechanical stability and poor ability to elongate of the at least one outer film (7a; 7b, 7c) are defined by one or more of the following mechanical properties:
- the elongation at break in a longitudinal direction (εB) and elongation at break in a transverse direction (εB) in accordance with DIN EN ISO 527-3 and DIN EN ISO 527-3, respectively, is less than 200%, preferentially less than 100%, most preferentially less than 50%;
- the trap tear resistance in a trapezoidal manner in a longitudinal direction or in a trapezoidal manner in a transverse direction in accordance with DIN 53363 and DIN 53363, respectively, is greater than 100 N, preferentially greater than 200 N; and/or
- the puncture resistance in accordance with ASTM E 154 is greater than 300 N, preferentially greater than 500 N, in particular preferentially greater than 800 N.

2. Tubular liner according to claim 1, **characterized in that** the at least one outer film (7a; 7b, 7c) is further formed in accordance with at least one arrangement from the following group:
- containing at least one olefin homopolymer or copolymer, preferably polyethylene (PE), in particular a high density polyethylene (HDPE),
- containing at least one polyester,
- containing at least one polyamide,
- containing at least one rubber, one hard rubber, one gum, one polystyrene, one high impact polystyrene (HIPS), one styrenebutadiene copolymer, one acrylonitrile-butadiene-styrene-(ter) polymer (ABS), one poly-carbonate (PC), one poly(meth)acrylate, PVC, or a mixture or a blend of the aforementioned polymers or other copolymers, terpolymers made of the monomers of the aforementioned polymers.

3. Tubular liner according to at least one of the preceding claims, **characterized in that** UV radiation and visible light radiation is inhibited in the wavelength range of 300 to 500 nm, preferably from 350 to 450 nm, at greater than 90% and in particular preferentially at greater than 99%, in particular through the addition of organic and/or inorganic color pigments and dyes and (if applicable) UV absorbers in at least one layer of the at least one outer film (7a; 7b, 7c).

4. Tubular liner according to at least one of the preceding claims, **characterized in that** the least one layer that is essentially impermeable for UV radiation and, if applicable, visible light, in the form of a UV / light protection film, is laminated on the specified mechanically stable layer, if applicable with one or more interim layers.

5. Tubular liner according to at least one of the preceding claims, **characterized in that** the thickness of the at least one outer film (7a; 7b, 7c) is in the range of 50 to 10,000 µm, preferentially 100 to 5,000 µm, in particular preferentially 200 µm to 1000 µm.

6. Tubular liner according to at least one of the preceding claims, **characterized in that** the at least one connecting point (9) between the longitudinal edges of the outer film (7a) or the outer films (7b, 7c) presents a predetermined breaking point, which may burst or break upon the radial elongation of the tubular liner (1).

7. Tubular liner according to at least one of the preceding claims, **characterized in that** the overlapping longitudinal edges (8) are connected to each other by means of, where applicable, double-sided tape, a thermal welding seam, a hot-melt adhesive or another adhesive in the form of a continuous adhesive seam or an interrupted adhesive application.

8. Tubular liner according to at least one of the preceding claims, **characterized in that** on the inner side directed to the resin-carrier layer (3), of at least one outer film (7a; 7b, 7c), preferably on all outer films (7a; 7b, 7c), a fleece (5) or a different material that is absorbent for liquid and resin is applied for the purpose of the better adhesion to the resin of the resin-carrier layer (3).

9. Tubular liner according to at least one of the preceding claims, **characterized in that**, between the resin-carrier layer (3) and the outer film system (7), at least one film is provided, in particular a wrapping film (6) or a covering film (6), which may be connected to a fleece (5) or a different material absorbent for liquid and resin.

10. Tubular liner according to at least one of the preceding claims, **characterized in that** polyamide is included as a styrene barrier at least in one layer of a film (7a, 7b; 6) surrounding the resin-carrier layer (3).

11. Tubular liner according to at least one of the preceding claims, **characterized in that** at least one layer of the at least one outer film (7a; 7b, 7c) has a barrier function against components of the reactive resin.

12. Tubular liner according to at least one of the preceding claims, **characterized in that** the outer film (7a; 7b) that is provided for application on the sewer pipe bottom covers in a circumferential direction an angular range of greater than 180°, such as, for example, of greater than 240°.

13. Tubular liner according to at least one of the preceding claims, **characterized in that** an upper outer film (7c), viewed in cross-section, is provided, which covers in a circumferential direction an angular range of less than 180° and is placed from above on a lower outer film (7b) and is connected to this on the edge side to form an overlap.

## Revendications

1. Gaine de chemisage de conduits (1) pour la réhabilitation de canalisations, avec au moins :
- une feuille tubulaire intérieure (2),
- avec une couche porteuse en résine (3) entourant la feuille tubulaire intérieure (2), dans laquelle la résine (3b) est durcissable au moyen d'un rayonnement ultraviolet ;
- avec un système de feuilles extérieures (7) enveloppant et protégeant mécaniquement la couche porteuse en résine (3), avec au moins une feuille extérieure (7a ; 7a, 7b) s'étendant dans la direction longitudinale de la gaine de chemisage de conduits (1), dans laquelle les bords longitudinaux (8) de la feuille extérieure (7a) ou des feuilles extérieures (7b, 7c) sont reliés entre eux avec un chevauchement dans la direction circonférentielle de la gaine de chemisage de conduits (1), dans laquelle l'au moins un point de raccordement (9) qui en résulte, s'allonge et, le cas échéant, rompe lors de l'extension dans la direction radiale lorsque la gaine de chemisage de conduits (1) est mise en place dans une canalisation à réhabiliter, et dans laquelle l'au moins une feuille extérieure (7a ; 7b, 7c) présente au moins une couche sensiblement imperméable au rayonnement ultraviolet et, le cas échéant, à la lumière visible,
**caractérisée en ce que**
l'au moins une feuille extérieure (7a ; 7b, 7c) présente à chaque fois au moins une couche en un matériau mécaniquement très stable et essentiellement non extensible ou seulement très peu extensible, l'au moins une feuille extérieure (7a ; 7b, 7c) se présentant sous la forme d'une feuille renforcée par un tissu, des fils, des fibres, un treillis ou un filet ou d'un tissu renforcé, en particulier un tissu renforcé par du PVC ou un tissu en Kevlar (fibres d'aramide), et ladite stabilité mécanique et la faible extensibilité de l'au moins une feuille extérieure (7a ; 7b, 7c) étant définies par l'une ou plusieurs des propriétés mécaniques suivantes :
- l'allongement à la rupture dans le sens longitudinal (εB) et l'allongement à la rupture dans le sens transversal (εB) selon la norme DIN EN ISO 527-3 ou DIN EN ISO 527-3 est inférieur à 200 %, de préférence inférieur à 100 %, plus préférablement inférieur à 50 % ;
- la résistance à la propagation de la déchirure trapézoïdale longitudinale ou trapézoïdale transversale selon la norme DIN 53363 ou DIN 53363 est supérieure à 100 N, de préférence supérieure à 200 N ; et/ou
- la résistance à la perforation selon la norme ASTM E 154 est supérieure à 300 N, de préférence supérieure à 500 N, plus préférablement supérieure à 800 N.

2. Gaine de chemisage de conduits selon la revendication 1, **caractérisée en ce que** le, au moins un, film extérieur (7a ; 7b, 7c) se présente en outre sous une forme selon au moins l'un des modes de réalisation du groupe suivant :
- comprenant au moins un homopolymère ou copolymère d'oléfine, de préférence du polyéthylène (PE), en particulier un polyéthylène haute densité (HDPE),
- comprenant au moins un polyester,
- comprenant au moins un polyamide,
- comprenant au moins un caoutchouc, un caoutchouc durci, de la gomme, un polystyrène, un polystyrène résistant aux impacts (HIPS), un copolymère styrène-butadiène, un (ter)polymère acrylonitrile-butadiène-styrène (ABS), un polycarbonate (PC), un poly(méth)acrylate, du PVC ou un mélange des polymères susmentionnés ou d'autres copolymères et terpolymères issus des monomères des polymères susmentionnés.

3. Gaine de chemisage de conduits selon au moins l'une des revendications précédentes, **caractérisée en ce que** le rayonnement ultraviolet et de lumière visible dans la gamme de longueurs d'ondes de 300 à 500 nm, de préférence de 350 à 450 nm, est empêché à un degré de plus de 90 % et, de manière particulièrement préférée, à un degré de plus de 99 %, en particulier par l'addition de pigments colorants et de colorants organiques et/ou inorganiques ainsi que, le cas échéant, d'absorbeurs UV dans au moins une couche de l'au moins une feuille extérieure (7a ; 7b, 7c).

4. Gaine de chemisage de conduits selon au moins l'une des revendications précédentes, **caractérisée en ce que** la, au moins une, couche sensiblement imperméable au rayonnement ultraviolet et, le cas échéant, à la lumière visible est laminée sur ladite couche mécaniquement stable sous la forme d'une feuille de protection contre le rayonnement UV/la lumière, le cas échéant avec une ou plusieurs couches intermédiaires.

5. Gaine de chemisage de conduits selon au moins l'une des revendications précédentes, **caractérisée en ce que** l'épaisseur de l'au moins une feuille extérieure (7a ; 7b, 7c) se situe dans la gamme de 50 à 10 000 µm, de préférence de 100 à 5 000 µm, de manière particulièrement préférée de 200 µm à 1 000 µm.

6. Gaine de chemisage de conduits selon au moins l'une des revendications précédentes, **caractérisée en ce que** le, au moins un, point de raccordement (9) entre les bords longitudinaux de la feuille extérieure (7a) ou des feuilles extérieures (7b, 7c) représente un point de rupture nominale qui est capable d'éclater ou de rompre à l'extension radiale de la gaine de chemisage de conduits (1).

7. Gaine de chemisage de conduits selon au moins l'une des revendications précédentes, **caractérisée en ce que** les bords longitudinaux (8) qui se chevauchent sont reliés l'un à l'autre au moyen d'un ruban adhésif éventuellement à doubles faces adhésives, d'un cordon de soudure thermique, d'une colle thermofusible ou d'une autre colle sous la forme d'un cordon de collage continu ou d'une application de colle interrompue.

8. Gaine de chemisage de conduits selon au moins l'une des revendications précédentes, **caractérisée en ce qu'**un non-tissé (5) ou un autre matériau absorbant pour les liquides et les résines est appliqué sur le côté intérieur d'au moins une feuille extérieure (7a ; 7b, 7c) faisant face à la couche porteuse en résine (3), de préférence sur toutes les feuilles extérieures (7a ; 7b, 7c), dans le but d'une meilleure adhérence à la résine de la couche porteuse en résine (3).

9. Gaine de chemisage de conduits selon au moins l'une des revendications précédentes, **caractérisée en ce qu'**au moins une feuille est prévue entre la couche porteuse en résine (3) et le système de feuilles extérieures (7), en particulier une feuille d'enroulage (6) ou une feuille de chemisage (6), qui, le cas échéant, sont reliées à un non-tissé (5) ou à un autre matériau absorbant pour les liquides et les résines.

10. Gaine de chemisage de conduits selon au moins l'une des revendications précédentes, **caractérisée en ce qu'**un polyamide en tant que barrière au styrène est contenu dans au moins une couche d'une feuille (7a, 7b ; 6) enveloppant la couche porteuse en résine (3).

11. Gaine de chemisage de conduits selon au moins l'une des revendications précédentes, **caractérisée en ce qu'**au moins une couche de la, au moins une, couche extérieure (7a ; 7b, 7c) a une fonction de barrière contre les composants de la résine réactive.

12. Gaine de chemisage de conduits selon au moins l'une des revendications précédentes, **caractérisée en ce qu'**au la feuille extérieure (7a ; 7b) qui est prévue pour venir en appui contre le fond du conduit de canalisation balaie un champ angulaire de plus de 180° dans la direction circonférentielle, par exemple de plus de 240°.

13. Gaine de chemisage de conduits selon au moins l'une des revendications précédentes, **caractérisée en ce qu'**il est prévu une feuille extérieure supérieure (7c), vue en coupe transversale, qui balaie un champ angulaire inférieure à 180° dans la direction circonférentielle et qui est posée par le haut sur une feuille extérieure inférieure (7b) et est reliée à cette dernière en zone de bord en formant un chevauchement.
